# EUROPEAN PATENT APPLICATION

(11) **EP 1 559 677 A2**
(43) Date of publication of application: **03.08.2005**
(21) Application number: 05250095.6
(22) Date of filing: 11.01.2005
(51) Int. Cl.: B82B 1/00, B82B 3/00, C23C 20/08, C23C 18/12

(54) **Mixed metal oxide layer and method of manufacture**

(30) Priority: 12.01.2004 US 756052
(71) Applicant: Hewlett-Packard Development Company, L.P., Houston, TX 77070 (US)
(72) Inventor: Beatty, Chris, Albany Obregon 97321 (US); Punsalan, David, Eugene Oregon 97401 (US)
(74) Representative: Jackson, Richard Eric

(57) **Abstract**

Various embodiments for mixed metal oxide layers and methods of making mixed metal oxide layers are described herein. A mixed metal oxide layer formed according to the various embodiments of the invention comprises spinning (120) one or more intermediate layers of a nanoparticle suspension on a substrate, drying (130) and firing (140) the intermediate layers to form the mixed metal oxide layer.

## Description

### BACKGROUND

### Field of the Invention

The present invention generally relates to mixed metal oxide layers. Background Information

Mixed metal oxides have an abundance of commercial uses. For many applications, mixed metal oxides must be manufactured into layers or films, either standing alone or deposited on a substrate. The quality of the layer or film *i*.*e*., uniformity, thickness, continuity (number of defects) and similar properties, may affect the performance of the material. In addition, some of the properties may be exaggerated when the films are thin.

Techniques are known for preparing thin films of various compositions, including mixed metal oxides, which may control certain quality aspects of the film. The technique or fabrication method used in preparing a mixed metal oxide layer or film may be selected based on a tradeoff of certain properties. For example, some fabrication methods provide a mechanism for very thin films, but may be very expensive and have a low film uniformity. Other processes may provide better uniformity and/or lower costs, but may not be capable of achieving very thin films. The subject matter described below may address one or more of these issues.

### BRIEF SUMMARY

Disclosed herein are mixed metal oxide layers and methods of making mixed metal oxide layers. A mixed metal oxide layer formed according to the various embodiments of the invention comprises spinning one or more intermediate layers of a nanoparticle suspension on a substrate, drying each intermediate layer, and firing the intermediate layers to form the mixed metal oxide layer.

### BRIEF DESCRIPTION OF THE DRAWINGS

For a detailed description of the embodiments of the invention, reference will now be made to the accompanying drawings in which:

Figure 1 shows a flow chart for one embodiment of the invention;

Figure 2a is a top view of a film dried at about 540°C shown at 25,000x magnification;

Figure 2b is a cross sectional view of a film dried at about 540°C shown at 100,000x magnification;

Figure 3a is a top view of a film fired at about 1050°C shown at 25,000x magnification;

Figure 3b is a cross sectional view of a film fired at about 1050°C shown at 100,000x magnification;

Figure 4a is a top view of a film fired at about 1200°C shown at 25,000x magnification;

Figure 4b is a cross sectional view of a film fired at about 1200°C shown at 100,000x magnification;

Figure 5a is a top view of a film fired at about 1400°C shown at 25,000x magnification; and

Figure 5b is a cross sectional view of a film fired at about 1400°C shown at 100,000x magnification.

### NOTATION AND NOMENCLATURE

Certain terms are used throughout the following description and claims to refer to particular system components. As one skilled in the art will appreciate, companies may refer to a component by different names. This document does not intend to distinguish between components that differ in name but not function. The terms used herein are intended to have their customary and ordinary meaning. The disclosure should not be interpreted as disclaiming any portion of a term's ordinary meaning. Rather, certain terms are intended to have additional scope, such as the terms "layer" and "film," which are intended to be interchangeable herein and thus individually will have a broader meaning that incorporates the full scope of both terms.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to indicate that the scope of the disclosure, including the claims, is limited to that embodiment. For example, fuel cell technology uses mixed metal oxide material as both electrolyte and electrode materials. Thus, for ease of discussion and for the sake of clarity certain aspects of the invention are discussed as part of a fuel cell. However, the embodiments of the invention are not intended and should not be interpreted to be limited to any particular application.

Various embodiments for mixed metal oxide layers and methods of making mixed metal oxide layers are described herein. Various embodiments of the invention may involve spinning a nanoparticle suspension of solid mixed metal oxide material to form a mixed metal layer. Embodiments of the invention may also include various other steps to achieve the mixed metal oxide layer. For purposes of this disclosure, references to "spinning" are not intended to be specific to a particular technique, but rather inclusive of all techniques in which spinning is involved, *e.g.*, spin coating and centrifuging.

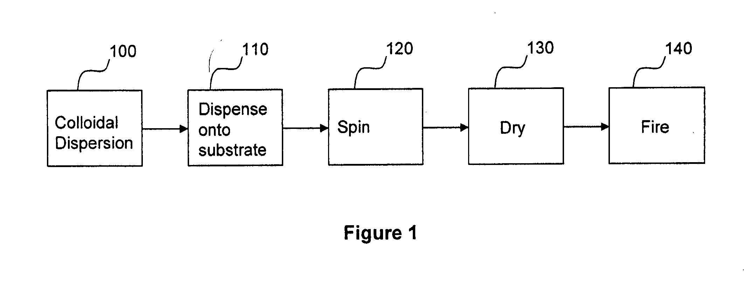

Referring to Figure 1, the flow chart shows the steps for one embodiment of the invention. A colloidal dispersion may be prepared or obtained 100 according to the considerations described herein. At least a portion of the colloidal dispersion may then be dispensed 110 unto a substrate. The substrate may then be spun 120 to actively spin coat the dispersion into a thin film over the substrate. The thin film or intermediate layer may then be dried 130 to form an intermediate layer of mixed metal oxide. Repeating steps 110, 120 and 130 may help build up the thickness of the intermediate layer. The intermediate layer may then be fired 140 to form the mixed metal oxide layer.

As shown in figure 1, one consideration of the various embodiments of the invention is the colloidal dispersion. As used herein, a colloidal dispersion may be a system in suspension in which there are two or more phases, namely a dispersed solid phase suspended in a continuous liquid phase. The term suspension is intended to encompass stable suspensions in which the nanoparticles remain suspended and exhibit a minimal amount of settling behavior. The dispersed solid phase may be comprised of nanometer sized particles, commonly referred to as nanoparticles. The particular size of the particles within the nanoscale may be dictated by desire and/or necessitated by the material itself or by a particular end use as will be understood by one of ordinary skill in the art.

The nanoparticles comprise mixed metal oxide material. The various embodiments of the invention are believed to be applicable to any mixed metal oxide material. By way of example only, suitable mixed metal oxide material may include, but is not limited to, doped Ce, doped Zr and the like, including mixtures thereof. Suitable nanoparticles are also commercially available already suspended.

The suspensions of the various embodiments disclosed herein comprise a liquid continuous phase. The continuous phase may be aqueous or non-aqueous based. Continuous phase liquids may comprise any liquid that will form a stable suspension with the solid nanoparticles without any significant dissolving of the solid material and can remain stable during the formation process until such time as the liquid is removed during drying or firing. Suitable liquids include, but are not limited to, water, isopropanol, xylene and the like, including mixtures thereof.

Other additives may also be present in the colloidal dispersion as desired and/or necessitated. For example, one embodiment having suspended nanoparticles may require a pH buffer or suspension stabilizer to create a more stable suspension, *e.g.*, acetic acid. These additives may be added directly to the suspension, added to the solid oxide material prior to suspension and/or residual from treatment of the solid oxide material prior to suspension. Other embodiments may include dispersants and/or binders. Dispersants may help form a more uniform suspension and binders may help in later stages to help form a more uniform mixed metal oxide layer. Dispersants and/or binders may be used in both aqueous and non-aqueous systems. Any suitable dispersant and/or binder will suffice provided they are stable in the suspension and during the formation process. Suitable dispersants may include, but are not limited to, polyvinyl alcohol (PVOH), acrylic emulsions, polyamide-epichlorohydrin, acrylamide, methylcellulose and the like, including mixtures thereof and derivatives. Suitable binders may include, but are not limited to, PVB, polyvinyl alcohol (PVOH), acrylic emulsions, polyamide-epichlorohydrin, acrylamide, methylcellulose and the like, including mixtures thereof and derivatives.

Another consideration with respect to various embodiments of the invention is the substrate. The substrate will depend upon the desire of the user and/or the demands of the particular end use. For example, a match between thermal expansion of the substrate and film may be important. Suitable substrates may include, but are not limited to, Al₂O₃, silicon, ceramics, anode materials, cathode materials, quartz and the like, including mixtures thereof.

Still referring to Figure 1, a mixed metal oxide layer may be formed by spin coating the colloidal dispersion on the substrate. The spin coating process involves dispensing a portion of the liquid dispersion onto a substrate and spinning the substrate to uniformly distribute the dispersion over the substrate as a thin film. The thickness of the film may be a function of the spin rate as will be understood by one of ordinary skill in the art.

After a thin film has been formed, the film may be dried to form an intermediate mixed metal oxide layer. Drying may be done in one or more stages. Multiple drying steps may avoid cracking or other damage to the layer or substrate. For example, a drying process may include subjecting the coated substrate to a relatively low temperature, *e.g.*, about 100°C, and then a higher temperature, *e.g.*, above the oxidation or burn-out point (usually about 400-500°C) of any additional suspension components (such as binders and/or dispersants) and below the point at which excessive grain growth of the mixed metal oxide material occurs. The temperature at which grain growth becomes a problem will vary greatly depending upon the type and composition of the film being produced. The exposure to these temperatures may be short, about 2 minutes or less, due to rapid effects of the temperature on the thin films. Additional intermediate drying steps using intermediate temperatures may be included as desired and/or necessitated by the thermal response of the materials being used.

The dried mixed metal oxide intermediate layer may then be fired. Firing the intermediate layer may be done at temperatures as needed to re-crystallize the desired film (generally above about 600°C). In one embodiment of the invention, the intermediate layer is fired at about 1400°C. In addition to removal of any residual materials, firing the intermediate layer may promote one or more of larger grain growth of the mixed metal oxide materials, planarization of the layer, healing of the film and increased uniformity. Alternatively, the film may not be fired until all of the layers have been successively dried, *i*.*e*., fire all of the stacked layers at once.

As mentioned above, the various embodiments of the invention may be appropriate for multiple applications. One embodiment of the invention that is illustrative of its usefulness comprises a fuel cell component prepared in accordance with the embodiments of the invention described herein. A fuel cell is an energy device that generates electricity and heat by electrochemically combining a gaseous fuel and an oxidizing gas.

Fuel cell components may generally be comprised of layers of electrode and electrolyte material. The electrode and/or electrolyte material may be deposited in accordance with the various embodiments described herein. Specifically, the electrode and/or electrolyte layers may be formed by spinning (via spin coating or centrifuging) one or more intermediate layers of a colloidal dispersion on a substrate. The substrate may be an already formed electrode or electrolyte layer. The colloidal dispersion should comprise nanoparticles of the solid electrolyte and/or electrode material and a liquid continuous phase. The intermediate layers may be successively deposited, dried and fired or successively deposited and dried and then fired after the desired thickness has been achieved by layer buildup.

It will be appreciated that the particular electrolyte material used in the embodiments of the invention is not critical to the spirit of the invention, provided that if the electrolyte material is to be spin coated it can be obtained or made into an appropriate nanoparticle size and comprise a stable nanoparticle suspension. The electrolyte material may be formed from any suitable material, as desired and/or necessitated by a particular end use. Suitable electrolyte materials may include, but are not limited to, cubic fluorite structure electrolytes, doped cubic fluorite electrolytes, proton-exchange polymer electrolytes, proton-exchange ceramic electrolytes, and mixtures thereof. Further, the electrolyte material may be yttria-stabilized zirconia (YSZ), samarium doped-ceria (SDC, CeₓSm_{y}O_{2-δ}), gadolinium doped-ceria (GDC, CeₓGd_{y}O_{2-δ}), LaₐSr_{b}Ga_{c}Mg_{d}O_{3-δ} and mixtures thereof.

Likewise, the electrode material used in the embodiments of the invention is not critical to the spirit of the invention. The electrode material may be formed from any suitable material, as desired and/or necessitated by a particular end use. In general, the electrode materials may be comprised of metal(s), ceramic(s) and/or cermet(s). It will be appreciated that the electrode materials may comprise either anodic or cathodic materials. Examples of suitable anodic materials include, but are not limited to, nickel, platinum, Ni-YSZ, Cu-YSZ, Ni-SDC, Ni-GDC, Cu-SDC, Cu-GDC and mixtures thereof. Examples of suitable cathodic materials include, but are not limited to, silver, platinum, samarium strontium cobalt oxide (SSCO, SmₓSr_{y}CoO_{3-δ}), barium lanthanum cobalt oxide (BLCO, BaₓLa_{y}CoO_{3-δ}), gadolinium strontium cobalt oxide (GSCO, GdₓSr_{y}CoO_{3-δ}), lanthanum strontium manganate (LSM), lanthanum strontium cobalt ferrite (LSCS) and mixtures thereof.

### Example

A samaria doped ceria (SDC) film was prepared on a substrate of Al₂O₃. The film was prepared from a SDC Nyacol® acetate-stabilized colloidal solution. The colloidal solution comprised nanoparticles of SDC suspended in an aqueous continuous phase. An 8-10 wt % polyvinyl alcohol solution was added at a volumetric ratio of 5:1. The mixture was then degassed in a vacuum oven at about 100°C. This step may not be used in various embodiments of the invention. A portion of the nanoparticle mixture was then dispersed onto the center of the Al₂O₃ wafer mounted horizontally onto a vertical shaft such that the surface of the substrate is perpendicular to the shaft. The wafer and shaft was then spun for about 10 seconds at about 400 rpm which removed most of the material from the wafer, and then accelerated to 2000 rpm for about 30 seconds. This evaporated the solvent and created a condensed layer of reapeatable thickness. The coated wafer was then heated for about 40 seconds at about 100°C, about 40 seconds at about 250°C, and then about 2 minutes at about 540°C. These layers were deposited by repeating this process. Each layer was approximately 0.35 µm thick. The SDC film was then fired in a high temperature furnace at about 1050°C, about 1200°C and about 1400°C. The temperature was held constant at each of these temperatures for about 1 hour with a 5°C/min ramp.

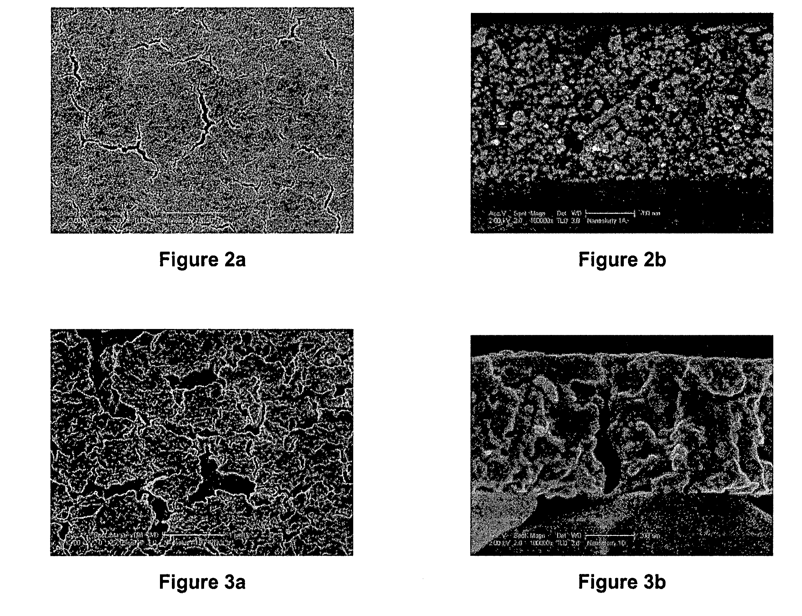

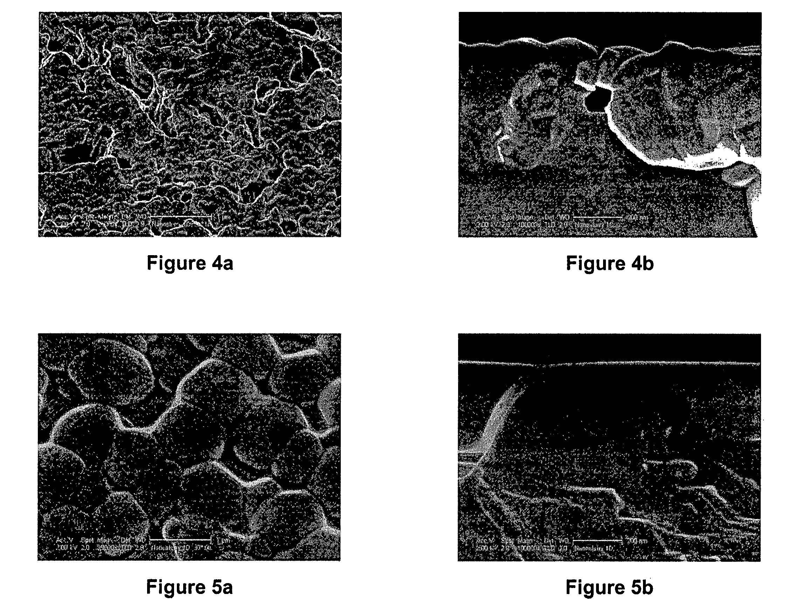

Figures 2a, 2b, 3a, 3b, 4a, 3b, 5a and 5b show the quality of the SDC film at the different stages of the process. Figs. 2a and 2b show the SDC film after drying at 540°C without any firing. Fig. 3a and 3b show the SDC film after firing at 1050°C. Fig. 4a show the SDC film after firing at 1200°C. Fig. 5a show the SDC film after firing at 1400°C. As can be seen from the Figures, at low temps the flow of the film replicates the defects in the substrate. Some surface defects are present, but a generally continuous film is achieved. Higher temperatures "heal" the defects with greater reflow of the film.

It will be appreciated that several additional consideration can be used to optimize the system as will be understood by those of ordinary skill in the art. For example in one embodiment in which both anode and electrolyte material are being deposited, the anode nanoparticles may be relatively much larger in size that the electrolyte nanoparticles. Smaller particles tend to reflow at lower temperatures than larger particles of the same material. Thus, smaller electrolyte particles may heal or planarize, while larger anode particles may be more porous. In addition, higher temperatures may promote layer grain growth, which may have undesirable effects on the electrical conductivity of the anode material.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications. For example, in an alternative embodiment the spinning of the substrate to produce a coated substrate wherein the spinning technique comprises at least one of (i) spin coating, and (ii) centrifuging may be carried out in a stepwise manner comprising two or more "spinning sessions" of increasing spin rates until the desired thickness is achieved.

In another alternative embodiment, the wafer is spun with the surface of the substrate substantially parallel to the spinning shaft (also known as centrifuging). In this mode, the substrate is placed into a container with a known quantity of the suspension (and potential binders or dispersants) and spun at high speeds (∼50,000 rpm) at a radius of a few centimeters. This produces centrifugal forces sufficient to consolidate the nominally stable colloid onto the substrate as a condensed film. After the spinning cycle is completed, the supernatant fluid is decanted and the film is dried and fired as described above.

## Claims

1. A method for preparing a mixed metal oxide layer, comprising:
(a) preparing a suspension (100) having nanoparticles including solid mixed metal oxide material,
(b) dispensing (110) at least a portion of the suspension onto a substrate;
(c) spinning (120) the substrate to produce a coated substrate;
wherein the spinning technique having at least one of
(i) spin coating, and
(ii) centrifuging; and
(d) heating (130, 140) the coated substrate to form an mixed metal oxide layer.

2. The method according to claim 1 wherein the mixed metal oxide comprises a material selected from the group consisting of doped Ce, doped Zr, and mixtures thereof.

3. The method according to claim 1 wherein the spinning technique (120) comprises spin coating.

4. The method according to claim 1 wherein the spinning technique (120) comprises centrifuging.

5. The method according to claim 1 wherein the nanoparticles comprise about 5 to about 75 nm.

6. The method according to claim 1 wherein the suspension further comprises an additive.

7. The method according to claim 6 wherein the additive is a binder.

8. The method according to claim 6 wherein the additive is a dispersant.

9. The method according to claim 6 wherein the additive comprises a compound selected from the group consisting of polyvinyl alcohol acrylic emulsions, polyamide-epichlorohydrin, acrylamide, methylcellulose, PVB, and mixtures thereof.

10. A mixed metal oxide layer formed by the process of:
(a) spinning (120) one or more intermediate layers of a colloidal suspension on a substrate, the colloidal suspension having nanoparticles of solid mixed metal oxide material and a liquid continuous phase;
(b) successively drying (130) each intermediate layer; and
(c) firing (140) to form a mixed metal oxide layer.

11. The layer according to claim 10 wherein the spinning (120) of intermediate layers comprises spin coating.

12. The layer according to claim 10 where in the spinning (120) of intermediate layers comprises centrifuging.
